Europäisches Patentamt

European Patent Office

Office européen des brevets

(11) Publication number: **0 592 691 A1**

## EUROPEAN PATENT APPLICATION
## published in accordance with Art. 158(3) EPC

(21) Application number: 93911954.1

(22) Date of filing: 28.04.93

(86) International application number: PCT/JP93/00571

(87) International publication number: WO 93/22586 (11.11.93 93/27)

(51) Int. Cl.⁵: **F16J 15/10, C08L 27/12, C08K 3/00**

(30) Priority: **30.04.92 JP 139872/92**

(43) Date of publication of application: **20.04.94 Bulletin 94/16**

(84) Designated Contracting States: **DE FR GB IT**

(71) Applicant: **DAIKIN INDUSTRIES, LIMITED**
**Umeda Center Building,**
**4-12 Nakazaki-nishi 2-chome,**
**Kita-ku**
**Osaka-shi, Osaka-fu 530(JP)**
Applicant: **UCHIYAMA MANUFACTURING CORP.**
**338 Enami**
**Okayama-shi, Okayama-ken 702(JP)**

(72) Inventor: **OHMORI, Mamoru, Uchiyama Manufacturing Corp**
**1106-11, Ohkanda,**
**Akasaka-cho**
**Akaiwa-gun, Okayama-ken 701-22(JP)**
Inventor: **NAMBA, Takashi, Uchiyama Manufacturing Corp**
**1106-11, Ohkanda,**
**Akasaka-cho**
**Akaiwa-gun, Okayama-ken 701-22(JP)**
Inventor: **HORICHI, Tsukasa, Uchiyama Manufacturing Corp**

**1106-11, Ohkanda,**
**Akasaka-cho**
**Akaiwa-gun, Okayama-ken0701-22(JP)**
Inventor: **TOMODA, Masayasu, Daikin Industries Ltd.**
**Yodogawa Seisakusho,**
**1-1, Nishi Hitotsuya**
**Settsu-shi, Osaka-fu 566(JP)**
Inventor: **NOGUCHI, Tsuyoshi, Daikin Industries Ltd.**
**Yodogawa Seisakusho,**
**1-1, Nishi Hitotsuya**
**Settsu-shi, Osaka-fu 566(JP)**
Inventor: **MATSUMOTO, Kazuhisa, Daikin IndustriesLtd.**
**Yodogaawa Seisakusho,**
**1-1, Nishi Hitotsuya**
**Settsu-shi, Osaka-fu 566(JP)**
Inventor: **MINAMINO, Etsuo, Daikin Industries Ltd.**
**Yodogawa Seisakusho,**
**1-1, Nishi Hitotsuya**
**Settsu-shi, Osakau-fu 566(JP)**

(74) Representative: **Barz, Peter, Dr. et al**
**Schmied-Kowarzik & Partner**
**Siegfriedstrasse 8**
**D-80803 München (DE)**

(54) **GASKET FOR AUTOMOTIVE ENGINE TRANSMISSION.**

(57) A gasket for automotive engine transmission, made from a cross-linking composition comprising 100 parts by weight of a polymer prepared by dissolving or swelling a noncrystalline fluoropolymer in an acrylic monomer

Rank Xerox (UK) Business Services
(3.10/3.09/3.3.4)

and polymerizing the monomer, 0.1 to 100 parts by weight of a filler, and 0.1 to 10 parts by weight of a cross-linking agent. This gasket is excellent in mechanical strength and resistance to engine oil bubbling at high temperatures and also in compression set, resistances to automatic transmission fluid and long-life coolant, and durability.

(Technical field)

The present invention relates to gaskets for motor vehicle engines and transmissions.

(Background art)

Gaskets for motor vehicles are used for sealing off the covers to be attached to the cylinder heads of motor vehicle internal combustion engines, and can be checked for suitability including that of the material thereof when subjected to thermal loads and vibrations during operation. More specifically, they must be resistant to cold for starting engines in a cold state and resistant to heat under high-speed loads. If the engine oil or transmission oil leaks owing to a temperature difference between the intake side and the exhaust side of the engine or to the angle at which the engine is mounted on the vehicle, the oil will drip onto the exhaust pipe in view of the construction of the engine, so that the gasketed portion is exposed to a great fire hazard.

While such gaskets for motor vehicle engines and transmissions have heretofore been prepared from an acrylic elastomer or fluorine-containing polymer, the former has the drawback of being inferior in heat resistance, mechanical strength when hot and resistance to engine oil bubbling. Although the latter is satisfactory in heat resistance and resistance to engine oil bubbling, the material has the drawback of being very low in mechanical strength when hot.

Accordingly, we prepared gaskets for motor vehicle engines and transmissions from a blend of both acrylic elastomer and fluorine-containing polymer. Unexpectedly, however, we found that the gaskets were seriously inferior in all the properties of heat resistance, mechanical strength when hot and resistance to engine oil bubbling. This is apparent from the comparative example given later.

An object of the present invention is to provide a gasket for motor vehicle engines and transmissions which is made of a vulcanized rubber prepared from a homogeneous dispersion of fluorine-containing polymer and acrylic elastomer and not undergoing phase separation, the gasket having outstanding heat resistance, mechanical strength when hot and resistance to engine oil bubbling as characteristics imparted thereto by the respective materials.

Another object of the invention is to provide a gasket for motor vehicle engines and transmissions which is excellent also in compression set (CS), resistance to ATF (Automatic Transmission Fuel), resistance to LLC (Long Life Coolant) and durability.

The present invention provides a gasket for motor vehicle engines and transmissions which is prepared from a crosslinkable composition comprising 100 parts by weight of a polymer, 0.1 to 100 parts by weight of a filler and 0.1 to 10 parts by weight of a crosslinking agent, the polymer being obtained by dissolving or swelling an amorphous fluorine-containing polymer in an acrylic monomer and subsequently polymerizing the monomer into a high polymer.

We have conducted intensive research in order to prepare homogeneous dispersions from fluorine-containing polymers and acrylic elastomers and to cause the two comonents to retain compatibility with each other after a heat treatment for vulcanization, and consequently prepared a gasket for use in motor vehicle engines and transmissions from a crosslinkable composition which is obtained by dissolving or swelling a fluorine-containing polymer in an acrylic monomer, thereafter polymerizing the acrylic monomer to prepare a polymer and admixing a filler and a crosslinking agent with the polymer. We have found that the gasket has outstanding properties in respect of heat resistance, mechanical strength in a hot state and resistance to engine oil bubbling which properties are unexpectable from mere blends of fluorine-containing polymers and acrylic elastomers as kneaded together.

The gasket of the invention for motor vehicle engines and transmissions is excellent also in compression set, ATF resistance, LLC resistance and durability.

Examples of amorphous fluorine-containing polymers which can be dissolved or swollen in acrylic monomers for use in the present invention are vinylidene fluoride/hexafluoropropylene, vinylidene fluoride/tetrafluoroethylene/hexafluoropropylene, vinylidene fluoride/chlorotrifluoroethylene and like vinylidene fluoride copolymers, tetrafluoroethylene/propylene, hexafluoropropylene/ethylene and fluoro(alkyl vinyl ether) (including those having a multiplicity of ether bonds)/olefin copolymers, fluorosilicone rubber, fluorophosphazene rubber, etc. Preferable among these are vinylidene fluoride/hexafluoropropylene, vinylidene fluoride/tetrafluoroethylene/hexafluoropropylene and vinylidene fluoride/chlorotrifluoroethylene polymers.

The term "amorphous" as used herein refers to elastomers the melting point of which is not observable substantially at the peak of DSC (Differential Scanning Colorimeter).

3

Acrylic monomers for use in the present invention are not limited and include mono- and polyfunctional monomers. Such monomers are used singly, or at least two of them are used in combination. Preferably, polyfunctional monomers are used in a small amount in combination with a monofunctional monomer. Examples of preferred monomers are methyl methacrylate (MMA), ethyl methacrylate (EMA), butyl methacrylate (BMA), 2-hydroxyethyl methacrylate (HEMA), glycidyl methacrylate (GMA), 2-methoxyethyl methacrylate (MEMA), 3-(trimethoxysilyl)propyl methacrylate (MSPM), 2-(phenylphosphoryl)ethyl methacrylate (phenyl-P), 2-hydroxy-3-($\beta$-napthoxy)propyl methacrylate (HNPM), N-phenyl-N-(2-hydroxy-3-methacryloxy)propylglycine (NPG-GMA), ethylene glycol dimethacrylate (EDMA or 1G), diethylene glycol dimethacrylate (DiEDMA or 2G), triethylene glycol dimethacrylate (TriEDMA or 3G), tetraethylene glycol dimethacrylate (TEDMA or 4G), 1,4-butanediol dimethacrylate (1,4-BuDMA), 1,3-butanediol dimethacrylate-(1,3-BuDMA), 2,2-bis[4-(2-hydroxy-3-methacryloxypropoxy)phenyl]propane (Bis-GMA), 2,2-bis(4-methacryloxyphenyl)propane (BPDMA), 2,2-bis(4-methacryloxyethoxyphenyl)propane (Bis-MEPP), 2,2-bis(4-methacryloxypolyethoxyphenyl)propane (Bis-MPEPP), di(methacryloxyethyl)-trimethylhexamethylenediurethane (UDMA), trimethylolpropanetrimethacrylate (TMPT),

$CH_2 = C(CH_3)COOCH_2CF_3$ (3FMA),

$CH_2 = C(CH_3)COOCH_2CF_2CF_2H$ (4FMA),

$CH_2 = C(CH_3)COOCH_2CF_2CF_3$ (5FMA),

$CH_2 = C(CH_3)COOCH_2(CF_2)_2CF_3$ (7FMA),

$CH_2 = C(CH_3)COOCH_2(CF_2)_3CF_2H$ (8FMA),

acrylates and $\alpha$ - fluoroacrylates corresponding to such compounds.

Examples of $\alpha$ -fluoroacrylates are

$CH_2 = CFCOOCH_2CF_2CF_2H$ (4FFA),

$CH_2 = CFCOOCH_2CF_2CF_3$ (5FFA),

$CH_2 = CFCOOCH_2(CF_2)_3CF_2H$ (8FFA) and

$CH_2 = CFCOOCH_2(CF_2)_5CF_2H$ (12FFA).

To modify the monomer, the monomer may have admixed therewith a small amount of acrylonitrile, 2-chloroethyl vinyl ether, vinyl monochloroacetate, methylvinyldichlorosilane or the like. When the polyfunctional monomer is to be used, it is suitable to use the polyfunctional monomer in an amount of 1 to 20 parts (by weight, the same as hereinafter) per 100 parts by weight of the monofunctional monomer.

The proportions of the amorphous fluorine-containing polymer and the acrylic monomer to be used in the present invention can be determined suitably. It is generally desirable to use 5 to 1000 parts of the latter per 100 parts of the former.

According to the present invention, the fluorine-containing polymer is dissolved or swollen in the acrylic monomer, which is then polymerized into a high polymer. The polymerization is conducted in the presence of a polymerization initiator. A polymerization inhibitor, reducing agent, transfer agent, etc. can be added to the polymerization system. Examples of useful polymerization initiators are light, heat, benzoyl peroxide, azoisobutyronitrile (AIBN), camphorquinone (CQ), 9-fluorenone, tributylborane (TBB), benzophenone and the like. Examples of useful reducing agents are dimethylaminoethyl methacrylate (DMAEMA), dimethyl-p-toluidine (DMPT) and the like. Examples of useful polymerization inhibitors are hydroquinone, hydroquinone methyl ester and the like. Examples of useful transfer agents include lauryl mercaptan.

Cross linking of the composition of the invention or use of the polyfunctional acrylic monomer forms an IPN (interpenetrating polymer network). IPN is a polymer obtained by mixing two linear polymers together each in the form of a liquid (or solution) and crosslinking one or both of the polymers to interlock the respective molecular chains. When IPN is to be formed according to the invention, the following method is usually employed. A monomer for forming a guest polymer is injected into the high polymer formed. Alternatively, the polymer is immersed in or injected into a solution containing the monomer. The mixture is then polymerized by heating, irradiation with light or like procedure, a filler, crosslinking agent, etc. are admixed with the resulting polymer, and the mixture is crosslinked. Other methods are also usable.

Examples of fillers useful for the present invention are carbon black, silica, clay, kieselguhr, talc, calcium carbonate and like reinforcing agents. The filler is used preferably in an amount of 0.1 to 100 parts per 100 parts of the polymer. If the amount is less than 0.1 part, an insufficient reinforcing effect will result, whereas if the amount is over 100 parts, the composition fails to exhibit rubberlike properties.

Examples of crosslinking agents useful for the invention are those for use in crosslinking vinylidene fluoride-containing rubbers, such as peroxides, polyols and polyamines. More specific examples are Perhexa 2.5B (peroxide manufactured by Nippon Oils & Fats Co., Ltd.), triallyl isocyanurate (TAIC) bisphenol AF, N,N'-dicinnamylidene-1,6-hexadiamine, etc. The crosslinking agent is used preferably in an amount of 0.1 to 10 parts per 100 parts of the polymer. If the amount is less than 0.1 part, the degree of crosslinking achieved is insufficient, whereas if the amount is in excess of 10 parts, the composition is unlikely to exhibit rubberlike properties.

When required, also usable are nitrogen- or phosphorus- containing organic tertiary or quaternary compounds as crosslinking accelerators, oxides or hydroxides of bivalent metals as an acid-acceptor, and compounds containing a plurality of vinyl or allyl groups and serving as auxiliary crosslinking agents. Further usable as required are antioxidants, processing assisting agents, scorch retarders, antiozonants, ultraviolet absorbers, flame retardants, plasticizers and other additives.

The gasket for motor vehicle engines and transmissions which is obtained according to the invention by dissolving or swelling the fluorine-containing polymer in the acrylic monomer and subsequently polymerizing the monomer is unexpectedly exceedingly superior in heat resistance, mechanical strength when hot and resistance to engine oil bubbling to those obtained from a mere blend of fluorine-containing polymer and acrylic elastomer.

The gasket of the invention for motor vehicle engines and transmissions is excellent also in compression set, ATF resistance, LLC resistance and durability.

The composition of the invention has a slightly higher viscosity than usual simple blended rubber materials, so that when comprising a peroxide which is decomposable at a low temperature (50 to 130 °C ) and a polyfunctional compound (as cross linking agents), the composition is applicable in situ for providing gaskets and can be vulcanized by being subjected to a hot-air atmosphere of 60 to 150 °C .

(Best mode of carrying out the invention)

Examples and Comparative Examples are given below. In these examples, the parts and percentages are all by weight.

Example 1 and Comparative Examples 1 to 3

Gaskets for motor vehicles were prepared from compositions comprising components listed in Table 1 below.

Comparative Example 4

Gaskets for motor vehicles were prepared in the same manner as in Example 1 from a composition obtained by blending the compositions of Comparative Examples 2 and 3 in the ratio of 50 : 50 by weight.
In table 1 :
G702 : vinylidene fluoride/hexafluoropropylene copolymer, product of Daikin Industries, Ltd.
FAU-014Y: copolymer of G702/nBuAc/1,6-HXA(70/27/3)
nBuAc : n-Butyl acrylate
1,6-HXA : 1,6-Hexanediol diacrylate
Naugard 445 : Age resistor, product of Uniroyal Chemical Co., Ltd.

5

Table 1

| | Example 1 | Comparative Example | | | |
|---|---|---|---|---|---|
| | | 1 | 2 | 3 | 4 |
| Halogen-containing acrylic rubber | - | 100 | 100 | - | 30 |
| G 702 | - | - | - | 100 | 70 |
| FAU-014Y | 100 | - | - | - | - |
| Stearic acid | - | 1 | 1 | - | 1 |
| MgO | - | - | - | 6.0 | 4.2 |
| HAF Carbon | - | 65 | 60 | - | 65 |
| MT Carbon | 20 | - | - | 20 | - |
| Plasticizer | - | - | 5 | - | - |
| Sulfur | - | 0.3 | - | - | - |
| Potassium stearate | - | 0.5 | - | - | - |
| Sodium stearate | - | 3.0 | - | - | - |
| Zinc-di-n-butylthiocarbamate | - | - | 1.5 | - | 0.5 |
| 2,4,6-Trimercapto-S-triazine | - | - | 0.5 | - | 0.2 |
| Ca(OH)$_2$ | - | - | - | 3.0 | 2.1 |
| 2,5-dimethyl-2,5-di-(t-butylperoxy)hexane | 1.5 | - | - | - | - |
| Triallyl isocyanurate | 4 | - | - | - | - |
| Naugard 445 | 0.6 | - | - | - | - |

The properties of the foregoing compositions were evaluated by the following methods. Table 2 shows the results.

(1) Tensile strength (T b) : According to JIS 6301.

(2) Tear strength (T R) : According to JIS 6301.

(3) Compression set (CS) : According to JIS 6301.

(4) German low temperature-torsional test : Measured according to JIS 6301 using refrigerant isopropyl alcohol (IPA).

(5) Resistance to engine oil bubbling : Measured using Nissan Extra Save X (7.5W-30), 150°C × 72hr

(6) ATF resistance : 150°C × 72hr, Castle fluid Dexron 2

(7) LLC resistance 120°C × 48hr, Toyota genuine LLC and water (1:1 vol ratio)

(8) Heat resistance : 175°C × 500hr

(9) Durability : The gasket tested was 5 × 9mm in cross section and having a cover groove measuring 5 × 6mm.

(a) Initial assembling bearing pressure : At least 30kgf/cm$^2$, 30 % compression.

(b) Initial sealing property : At least 2 kgf/cm$^2$ in bearing pressure, 30 % compression.

(c) Crack resistance : 6 mm in groove depth, 9 mm in height, 3 mm in exposed part, 50 % compression, 150°C × 24hr, 5 cycles.

(d) Continuous high-speed endurance : 30 % compression, 150°C × 500hr

(e) Thermal shock leak endurance : 30 % compression, (150°C × 15hr) + (-30°C × 9hr), 20 cycles, filled with oil and free of pressure, was subjected to thermal shock, and checked for leakage with reference to a color change in micro-check indicating oozing oil.

## Table 2

| | Example | Comparative Example | | | |
|---|---|---|---|---|---|
| | 1 | 1 | 2 | 3 | 4 |
| T b (kgf/cm²) | 142 | 103 | 126 | 213 | 76 |
| T R (Kgf/cm) | 27 | 17 | 18 | 31 | 25 |
| C.S (150℃ × 70hr) | 15 | 29.9 | 32.0 | 18 | 78.3 |
| German low temperature-torsional test | | | | | |
| $T_{10}$ | -19.0 | -24 | -24 | -17.5 | -3 |
| $T_{50}$ | -24.0 | -30 | -30 | -22.5 | -7 |
| Resistance to engine oil bubbling | +3.0 | +2.3 | +2.1 | +1.0 | +3.2 |
| ATF resistance $\Delta V$ (%) | 1.7 | 2.6 | 4.2 | 1.1 | 3.5 |
| LLC resistance $\Delta V$ (%) | 2.8 | 27.2 | 26.0 | 1.3 | 8.3 |
| Heat resistance 170℃ × 500hr $\Delta H$ | +4 | +22 | +24 | 0 | +7 |
| Durability | | | | | |
| Initial assembling bearing pressure | ○ | ○ | ○ | ○ | ○ |
| Initial sealing property | ○ | ○ | ○ | ○ | ○ |
| Crack resistance | △ | ○ | ○ | △ | △ |
| Continuous high-speed durability | ○ | ○ | △ | ○ | △ |
| Thermal shock leak endurance | ○ | ○ | △ | △ | × |

(Industrial applicability)

The gasket of the invention for motor vehicle engines and transmissions has outstanding heat resistance, mechanical strength when hot and resistance to engine oil bubbling. Further, the gasket of the invention for motor vehicle engines and transmissions is excellent in compression set, ATF resistance, LLC resistance and durability.

**Claims**

1. A gasket for motor vehicle engines and transmissions which is prepared from a crosslinkable composition comprising 100 parts by weight of a polymer, 0.1 to 100 parts by weight of a filler and 0.1 to 10 parts by weight of a crosslinking agent, the polymer being obtained by dissolving or swelling an amorphous fluorine-containing polymer in an acrylic monomer and subsequently polymerizing the monomer into a high polymer.

2. A gasket for motor vehicle engines and transmissions as defined in claim 1 wherein the amorphous fluorine-containing polymer is vinylidene fluoride/hexafluoropropylene, vinylidene fluoride/tetrafluoroethylene/hexafluoropropylene, vinylidene fluoride/chlorotrifluoroethylene and like vinylidene fluoride copolymer, tetrafluoroethylene/propylene, hexafluoropropylene/ethylene and fluoro-(alkyl vinyl ether)(including those having a multiplicity of ether bonds)/olefin copolymer, fluorosilicone rubber or fluorophosphazene rubber.

3. A gasket for motor vehicle engines and transmissions as defined in claim 2 wherein the amorphous fluorine-containing polymer is vinylidene fluoride/hexafluoropropylene, vinylidene fluoride/tetrafluoroethylene/hexafluoropropylene or vinylidene fluoride/chlorotrifluoroethylene copolymer.

4. A gasket for motor vehicle engines and transmissions as defined in claim 1 wherein, as the acrylic monomer, the monofunctional acrylic monomer and the polyfunctional acrylic monomer are used conjointly.

5. A gasket for motor vehicle engines and transmissions as defined in claim 1 wherein the polyfunctional monomer is used in an amount of 1 to 20 parts by weight per 100 parts by weight of the monofunctional monomer.

6. A gasket for motor vehicle engines and transmissions as defined in claim 1 wherein the acrylic monomer is used in an amount of 5 to 1000 parts by weight per 100 parts of the amorphous fluorine-containing polymer.

7. A gasket for motor vehicle engines and transmissions as defined in claim 1 wherein the filler is carbon black, silica, clay, kieselguhr, talc or calcium carbonate.

8. A gasket for motor vehicle engines and transmissions as defined in claim 1 wherein the crosslinking agent is peroxide, polyol or polyamine.

| A. | CLASSIFICATION OF SUBJECT MATTER |
|---|---|

Int. Cl$^5$  F16J15/10, C08L27/12, C08K3/00

According to International Patent Classification (IPC) or to both national classification and IPC

| B. | FIELDS SEARCHED |
|---|---|

Minimum documentation searched (classification system followed by classification symbols)

Int. Cl$^5$  F16J15/10, C08L27/12, C08K3/00

Documentation searched other than minimum documentation to the extent that such documents are included in the fields searched

Jitsuyo Shinan Koho                    1926 - 1993
Kokai Jitsuyo Shinan Koho              1971 - 1993

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br>A | JP, A, 3-56771 (Nippon Rainz K.K.),<br>March 12, 1991 (12. 03. 91), (Family: none) | 1-3<br>4-8 |
| Y<br>A | JP, A, 63-17983 (Nippon Rainz K.K.),<br>January 25, 1988 (25. 01. 88), (Family: none) | 1-3<br>4-8 |
| Y<br>A | JP, A, 2-308841 (Japan Synthetic Rubber<br>Co., Ltd.),<br>December 21, 1990 (21. 12. 90), (Family: none) | 1-3<br>4-8 |
| A | JP, A, 2-276809 (Daikin Industries, Ltd.),<br>November 13, 1990 (13. 11. 90), (Family: none) | 1-8 |
| A | JP, A, 2-245046 (NOK K.K.),<br>September 28, 1990 (28. 09. 90), (Family: none) | 1-8 |

| X | Further documents are listed in the continuation of Box C. | | See patent family annex. |
|---|---|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| August 13, 1993 (13. 08. 93) | August 31, 1993 (31. 08. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)